# EUROPEAN PATENT APPLICATION

(11) **EP 1 602 397 A1**
(43) Date of publication of application: **07.12.2005**
(21) Application number: 05253190.2
(22) Date of filing: 24.05.2005
(51) Int. Cl.: A63B 57/00

(54) **Golf flag support**

(30) Priority: 25.05.2004 GB 0411612
(71) Applicant: Llewellyn, Roger, Hucclecote Gloucester GL3 3HX (GB)
(72) Inventor: Llewellyn, Roger, Hucclecote Gloucester GL3 3HX (GB)
(74) Representative: Lawrence, John

(57) **Abstract**

A golf flag support (8) comprising: an elongated support element (16) adapted to provide support to a fabric flag (30) such that, in use, the support element extends away from a flagpole (14); a rotatable mounting (10) connected to the support element (16) adapted to allow the support element (16) to rotate about the flagpole (14); and a wind indicating member (24) connected to the support element (16) such that the wind indicating member (24) is diametrically on the opposite side of the flagpole(14) to the support member (16).

To be accompanied by Figure 11 when published

## Description

This invention relates to a golf flag support.

Golf has its origins in the 15^{th} century and for much of this period, up until the present day, flags have been used on golf greens to mark the position of the hole. Such flags are also useful as an indication of the wind speed and direction so that a golfer distant from the green is able to compensate for the wind when he takes his shot.

Modern golf flags are able to rotate about a flagpole so that the orientation of the flag can easily align with the wind direction. One way of achieving this is to have a tube sewn into one edge of the flag so that the tube may be fitted onto a flagpole, this system is shown in Figure 1 and is marketed under the name Tube-Lock™. Alternatively, a wire, as illustrated in Figure 2, may be threaded through a sleeve in an edge of the flag with each end of the wire terminating in a loop for fitting over the flagpole. Figure 3 illustrates another type of rotational coupling, in this case clips which are attached to the flag snap onto the flagpole.

Typically a club or professional golfer will hit at least one shot of about two or three hundred yards for each hole played - even a light wind can have a significant effect on the trajectory of a golf ball when the golf ball is hit over such a long distance. Conventional golf flags suffer from the problem that in light wind conditions the fabric of the flag will be limp and will drape against the flagpole. Under such conditions a golfer will have no indication of the wind direction.

Under medium and high wind conditions the flag will be blown so that it extends away from the flagpole in a direction aligned with the wind direction. However, the flag will generally flap or ripple making it difficult for a golfer to accurately determine the wind direction; the golfer will have to estimate the mean position about which the flag is flapping/rippling.

According to a first aspect of the invention there is provided, a golf flag support comprising: an elongated support element adapted to provide support to a fabric flag such that, in use, the support element extends away from a flagpole; and a rotatable mounting connected to the support element adapted to allow the support element to rotate about the flagpole.

The term "fabric" is to be understood to mean any type of cloth made by weaving, knitting, felting etc.

By providing a support element the flag is held away from the flagpole. The wind will then act on the flag so that the flag is aligned with the wind. Therefore, even in light wind conditions a golfer will be able to judge the direction of the wind and will be better able to judge his shot.

Sometimes the wind conditions are variable such that the wind strength may drop for short periods such that a conventional flag will drape against the flagpole. For the periods that the wind strength has dropped a flag, supported by the flag support of the invention, will always be aligned with the direction of the wind when the wind was last sufficient to align the flag.

With hindsight, in view of the current invention, a stiff flag constructed of plastic or other rigid material may be considered. Such flags are not within the scope of the current invention and are not generally used on golf greens because they do not ripple or flap in the wind and would therefore give no indication of the wind strength. Furthermore, plastic flags will be heavier than similarly sized fabric flags and will not be as responsive to light winds. Also plastic flags do not have the same aesthetic appeal as fabric flags and it is unlikely that they will be adopted on golf greens irrespective of the above-mentioned disadvantages.

The elongated support element may be a rod, made from, for example, of a material chosen from fibreglass, plastic, metal, metal alloy and wood. Alternatively the elongated support element may be a wire made from a material such as metal, metal alloy or plastic.

The support element may extend substantially along the full length of the flag, for example along an upper or lower edge of the flag or both the upper and lower edges of the flag. Such a support element will then hold the flag away from the flagpole whilst still allowing some freedom for the flag to flap or ripple. There may be two or more support elements.

In an embodiment of the invention the support element extends for less than the full length of the flag. In this way, the portion of the flag supported by the support element will give an accurate indication of wind direction whereas the portion of the flag that is not supported by the support element will have greater freedom to flap in the wind so that the golfer can better estimate the wind speed from the amount of flapping of the unsupported flag. Preferably, the support member extends for a length that is between 25-75% of the full length of the flag. More preferably, the support member extends for a length that is between 40-60% of the full length of the flag.

The support element provides support to a flag by extending the flag away from the flagpole. This can be achieved by positioning the support element in many different ways, for example the support element may run horizontally through the middle of the flag, diagonally through the flag, or along an upper or lower edge of the flag. However, the best arrangement is for the support element to support the flag along the upper edge of the flag so that the flag can drape down from the support element.

Preferably the flag support comprises an indicating member connected to the support member such that in use the indicating member is diametrically on the opposite side of the flagpole to the support member.

If the flag flaps or ripples due to a moderate or strong wind the indicating member will give an accurate indication of wind direction and it is not necessary for the golfer to estimate the direction about which the flag is flapping.

The indicating member will generally have sufficient stiffness so that it does not bend significantly under normal wind conditions.

The support element is generally an elongated member such as a rod or wire. The rod may be made of, for example, fibreglass, plastic, metal, metal alloy or wood. The wire may be made of, for example, metal, metal alloy or plastic. The support element will generally be a linear element, (for example, if the support element is a rod) but the support element may also be a curved, for example, the support element may comprise a curved section of wire.

The rod may have a longitudinal slot that is closable so as to hold an edge of a flag.

If the flag has a thickened edge (e.g. the flag may be provided with beading along an edge of the flag) then the rod may be provided with a longitudinal cavity to house the thickened edge. In this case the rod will also have a longitudinal slot opening that communicates with the longitudinal cavity, the longitudinal slot opening having a diameter that is less than the width of the longitudinal cavity such that the thickened portion of the flag may be entered into the longitudinal cavity. Therefore, the thickened edge of the flag will be held in the longitudinal cavity with the rest of the flag hanging out of the rod via the longitudinal slot opening.

Preferably, when the flag is rectangular, the support element extends at substantially 90° to the flagpole. However the support element may also extend at an angle to the flagpole, for example the support element may run diagonally across a flag, or the support element may run along the edge of a triangular flag.

The rotatable mounting may comprises, for example, a hollow tube adapted to fit over the flagpole, an elongated member such as a wire having one or more loops adapted to fit over the flagpole, or one or more clips adapted to clip onto the flagpole.

The support element may have one or more engagement members engageable with corresponding engagement members of a flag. For example one of the flag or the support element is provided with eyes or rings and the other of the flag or the support element is provided with hooks to engage the eyes/rings. Other suitable engagement members include press-studs and strips of Velcro™. The term Velcro™ is to be understood to be a piece material having many hooked threads to fasten to a corresponding piece of material.

In an alternative arrangement the flag is be provided with a sleeve so that the support element may be inserted into the sleeve. The skilled person will be able to think of various other methods of attaching the flag to the support member.

A second aspect of the invention provides a golf flag assembly comprising the golf flag support of the first aspect of the invention and a fabric flag supported by the flag support.

A third aspect of the invention provides a flagpole assembly comprising a flag pole as the flag support of the first aspect of the invention. The flagpole assembly may further include a fabric flag supported by the flag support element. The flagpole may be telescopic.

The flagpole assembly may be used on a green, in which case the length of the flagpole may be in the range 60cm to 125cm. The flagpole assembly may be adapted to be hand held in which case the length of the flagpole may be in the range 15cm to 100cm, and the flagpole may be provided with a handgrip.

A fourth aspect of the invention provides a golf trolley system comprising a golf trolley for holding golf clubs and the flagpole assembly of the third aspect of the invention.

Embodiments of the invention will now be described in more detail by way of example with reference to the accompanying drawings, of which:

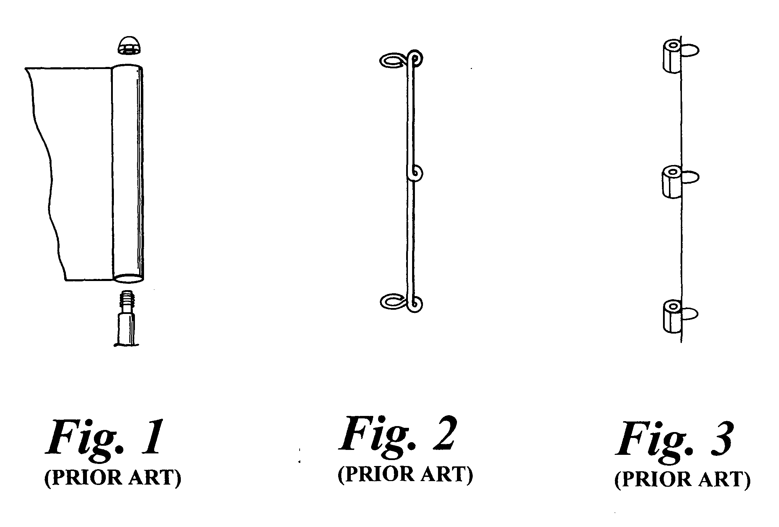

**Figure 1** is a schematic view of a Tube-Lock™ flag system;
**Figure 2** is a schematic view of a wire rotational flag mounting;
**Figure 3** is a schematic view of a clip rotational flag mounting;

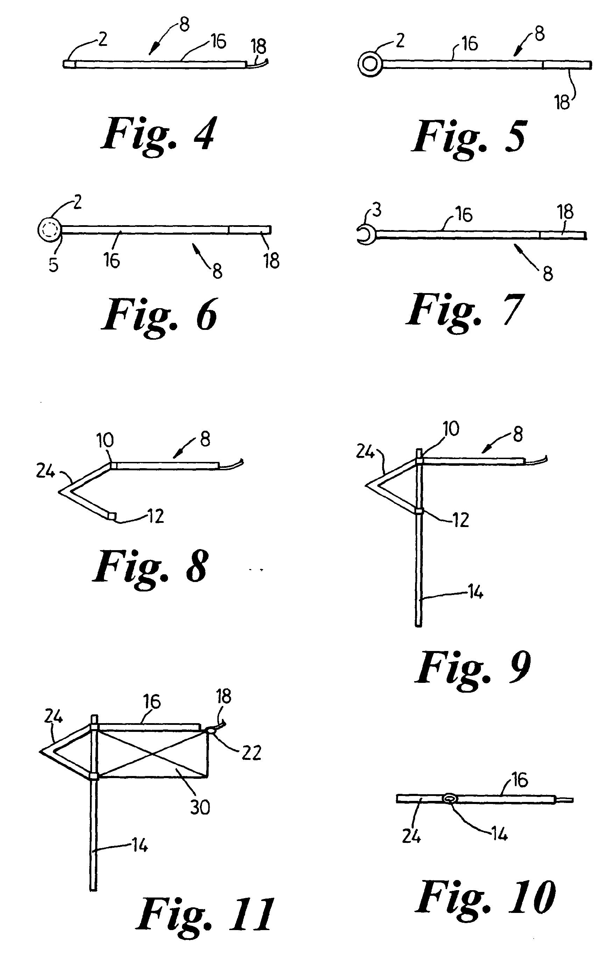

**Figure 4** is a schematic side view of a flag support;
**Figure 5** is a schematic plan view of a flag support having a collar;
**Figure 6** is a schematic plan view of a flag support having a collar with a blind end;
**Figure 7** is a schematic plan view of a flag support having a C-shaped clip;
**Figure 8** is a schematic view of a flag support which comprises a rotatable indicator;
**Figure 9** is a schematic view of a flagpole assembly comprising the flag support of Figure 8 fitted to a flagpole;
**Figure 10** is a schematic plan view of the flagpole assembly of Figure 9;
**Figure 11** is a schematic view of the flagpole assembly of Figure 9 to which a flag has been fitted;

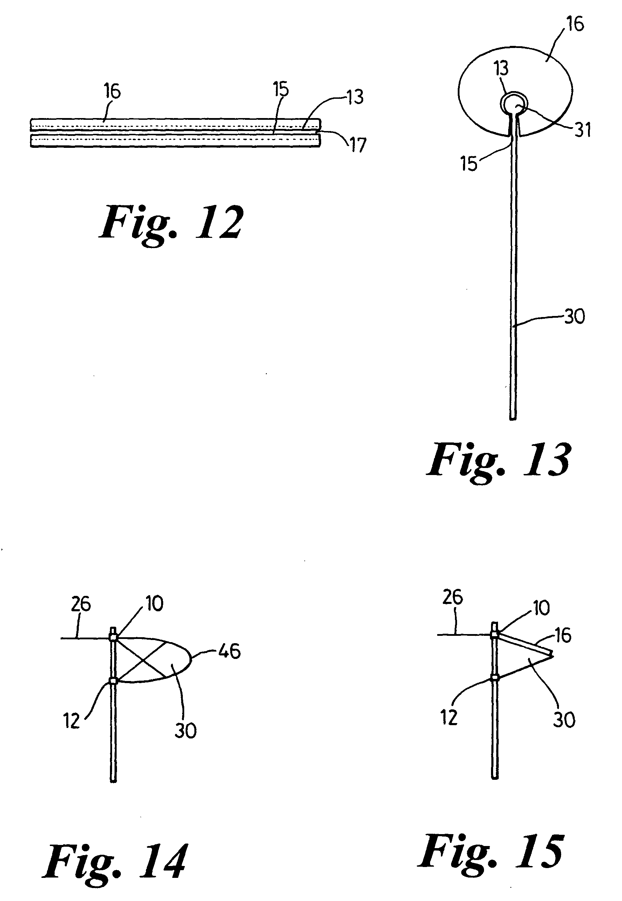

**Figure 12** is an underside view of a rod support element having an elongated slot;
**Figure 13** is an end view of the rod support element of Figure 12 together with a flag held by the rod support element;
**Figure 14** is a schematic illustration of a flagpole assembly having a flag support comprising a wire support element and a rod-like indicator together with a flag which has a curved edge;
**Figure 15** is a schematic illustration of a flagpole assembly having a flag support comprising a support element and a rod-like indicator together with triangular flag;

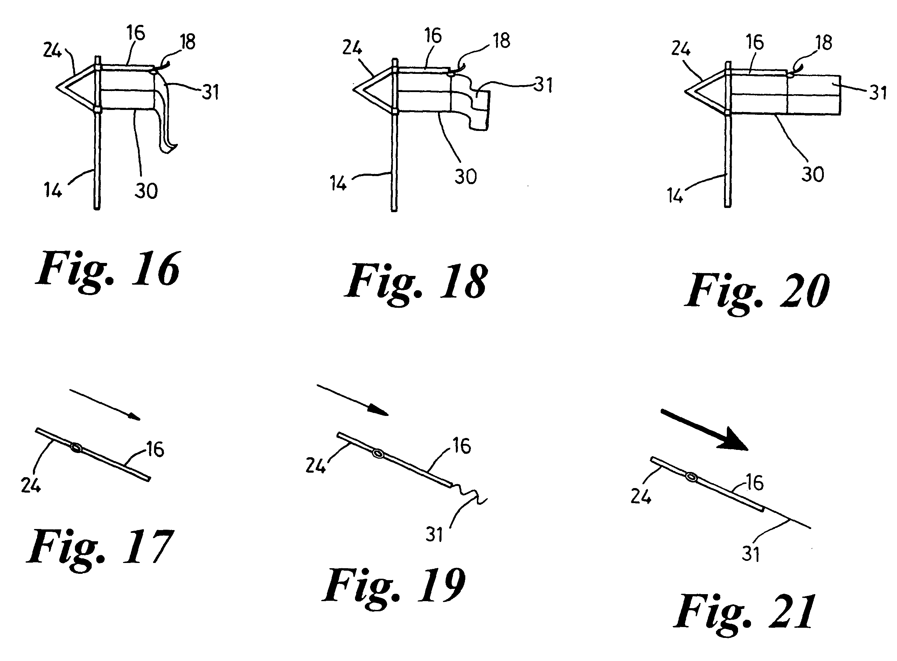

**Figure 16** is a schematic illustration of a flagpole assembly together with a flag, the flagpole assembly having a flag support for supporting the flag along a portion of the upper edge of the flag, and the flagpole assembly being in light wind conditions;
**Figure 17** is a schematic plan view of the flagpole assembly of Figure 17;
**Figure 18** is a schematic illustration of the flagpole assembly of Figure 16, but with the flagpole assembly being in moderate wind conditions;
**Figure 19** is a schematic plan view of the flagpole assembly of Figure 18;
**Figure 20** is a schematic illustration of the flagpole assembly of Figure 16, but with the flagpole assembly being in strong wind conditions;
**Figure 21** is a schematic plan view of the flagpole assembly of Figure 20;

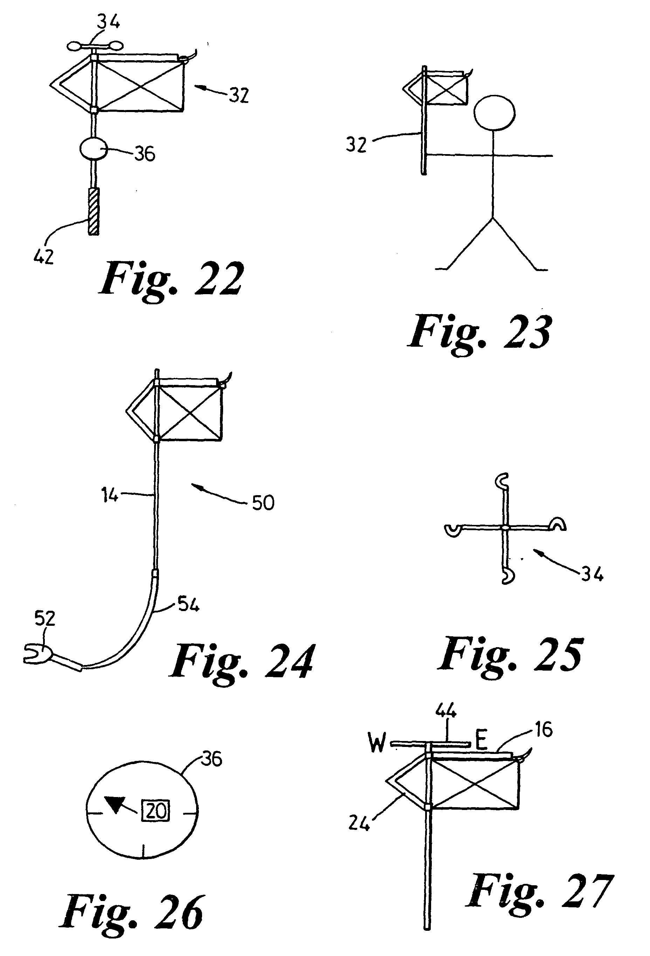

**Figure 22** is a schematic illustration of a handheld flagpole assembly;
**Figure 23** is a schematic illustration of a handheld flagpole assembly being held by a golfer;
**Figure 24** is a schematic illustration of a flagpole assembly for attachment to a golf trolley or cart;
**Figure 25** is a schematic illustration of a spinning element used to measure wind speed;
**Figure 26** is a schematic illustration of a dial for giving a readout of wind speed obtained from the spinning element of Figure 25; and
**Figure 27** is a schematic illustration of a flagpole assembly having a static direction indicator.

Referring to Figures 4 to 6, a flag support 8 is shown having a collar 2 for fitting over a flagpole 14. The collar 2 provides a rotatable connection that connects the flag support 8 to the flagpole 14 that allows 360° rotation of the flag support 8 about the axis of the flagpole 14. Figure 5 is a plan view of a flag support 8 in which the collar 2 takes the form of a hollow cylinder that is arranged to be a tight fit with the flagpole 14 so that the collar 2 does not slide down the flagpole 14. Alternatively the collar 2 need not be a tight fit with the flagpole 14 and the collar 2 is prevented from sliding the flagpole 14 by an abutment (not shown) that protrudes from the flagpole 14 to engage the lower edge of the collar 2.

Figure 6 is a plan view of a flag support 8 similar to that illustrated in Figure 5 except that the collar 2 has a blind end 5 arranged to abut the upper end of the flagpole to prevent the collar 2 sliding down the flagpole 14. Instead of a collar 2 the rotatable connection could be a tube, a looped wire or a spring clip similar to those illustrated in Figures 1 to 3. Figure 7 illustrates a plan view of a flag support 8 in which the rotatable connection is in the form of a C-shaped clip 4.

Connected to the collar 2, or other rotatable connection, is a rod 16 that extends away from the pole 14 and which is adapted to support a fabric flag 30. The rod may be made of, for example, fibreglass, plastic, metal, metal alloy or wood. The flag 30 is supported by the rod 14 by connecting the upper edge of the flag 30 to the rod 16. The flag support 8 may be provided with a one or more hooks 18 that are arranged to engage corresponding eyes in the flag 30 or rings 22 that pass through the flag 30. Of course the flag 30 may be connected to the rod by having the hooks on the flag 30 that engage eyes/rings in the rod 16.

There are many different ways in which the flag 30 can be connected to the rod 16, for example, press-studs or Velcro strips could be used or a zip mechanism could be used in which in which the inter-engaging teeth of the zip are provided, respectively, on the flag 30 and the rod 16. Another way is to use a flag 30 that has a sleeve to accommodate the rod 16. The rod 16 may have a longitudinal slot to accommodate an edge of the flag 30 which is closable to grasp the edge of the flag 30.

An edge of the flag 30 may be thicker than the remainder of the flag 30, that is the flag 30 has a bead running along one of its edges. Figures 12 show the underside a rod 16 that has a longitudinal cavity 13 that is adapted to accept the bead 31 of the flag 30. Communicating with the longitudinal cavity 13 is a longitudinal slot opening 15 which allows the remainder of the flag material to extend away from the beading and the rod via the longitudinal slot opening 15. Figure 12 is an end view of the rod 16 in which the bead 31 of a flag has been entered into the cavity 13 via an opening of the cavity 13.

The rod 16 may be provided along the bottom of the flag as well as or instead of the top edge, or the rod 16 may run through the middle of the flag 30 or diagonally across the flag 30. Generally, however, it is preferable that the rod or other support element should support the flag 30 along the top edge of the flag 30 so that the flag 30 will hang down from the rod/support element 16, in this case when used with a rectangular flag the rod will extend substantially horizontally from the flagpole 14. It will be understood, however, that the invention is not limited for use with rectangular flags. If, for example a support element supports an edge of a triangular flag (as illustrated in Figure 15) then the support element may, of course, extend away from the flag at angle that is not horizontal.

Referring to Figure 14, the flag support may have a wire support element 46 instead of a rod 16. The wire support element 46 may support an upper edge of a flag 30 in a similar fashion to the rod 16 as described above. A wire support element 46 may be used to follow at least part of the perimeter of a flag for example a flag that has a curved edge such as that illustrated in Figure 14.

Referring to Figure 8 to Figure 11, in an embodiment of the invention the flag support 8 has two rotational couplings 10,12 and is provided with an indicator 24 that extends from the rotational couplings 10,12 so that the indicator is diametrically opposite the rod 16. The rotational couplings take the form of an upper 10 and a lower 12 collar for fitting over a flagpole 14, however any of the other rotational couplings described above may be used. The indicator 24 may be connected directly to the rod 16 or may be connected to the rod 16 via the collars 10, 12. The indicator 24 will therefore point to the direction that the wind is coming from. If the wind shifts direction then the flag 30 and rod 16 will move to align with the new wind direction which will then cause the indicator 24 to move to indicate the new wind direction.

Referring to Figure 9, one form of indicator 24 has a shape that defines two edges of a triangle with the apex of the triangle pointing away from the flagpole 14 so as indicate the wind direction. One or both of the other ends of the indicator 28 may be connected to a rotatable coupling 10,12, for example, as is shown in Figure 4, one end is connected to the upper collar 10 whilst the other end is connected to the lower collar 12.

It will be appreciated that the main advantages of the invention will be achieved if the flag support has only one rotational coupling, for example it may only have the upper collar 10 with the lower end of the indicator 24 being a free end.

Instead of having a triangular shape the indicator may take the form of a simple elongated member 26, that is connected to the rod 16 supporting the flag or to the rotational coupling. Such an indicator may be rod-like as is illustrated in Figures 14 and 15. It will be appreciated indicators having various other geometries would achieve the main advantages of the invention.

Referring to Figures 16 to 21, in an embodiment of the invention the rod 16 only supports the flag 30 along a portion of the upper edge of the flag 16 with the remainder of the flag 31 being unsupported. This arrangement allows the unsupported portion 31 to flap freely to an extent determined by the wind strength. Figures 16, 18 and 20 show the flag in different wind conditions; Figures 17, 19 and 21 are plan views of Figures 16, 18 and 20 respectively. Figures 16 and 17 shows the flag 30 in light wind conditions, in this case the unsupported portion 31 of the flag 30 drapes down against the supported portion of the flag. Figures 18 and 19 shows the flag 30 in moderate wind conditions, in this case the unsupported portion 31 of the flag 30 flaps. Figures 20 and 21 shows the flag 30 in strong wind conditions, in this case the unsupported portion 31 of the flag 30 is in effect supported by the wind and does not drape or flap (or flaps to a lesser extent than in moderate wind conditions). The golfer therefore has a clear indication of both wind speed and wind direction no matter what the wind strength.

It would be useful for the flag support 8 to be placed on flagpoles at various positions along a golf course, e.g., at the tee or at intervals adjacent to the fairway, as well as at the green. The wind speed and direction may vary over the length of a course due to, for example, natural features such as hillocks and wooded areas. Having flagpoles spaced along the course would allow a golfer to get a more accurate determination of the wind speed and direction for the portion of the course over which he is about to play a shot.

In an embodiment of the invention the flagpole assembly is adapted to be held by the golfer or attached to his golf trolley or golf cart so that the golfer can gauge the wind at the actual position that he is going to play his shot. Such wind indicators can be used for practise/training or for friendly games, however, it may be that they will not be sanctioned for competitions and tournaments.

Figures 22 and 23 illustrate a handheld flagpole assembly 32. The flagpole assembly 32 is similar to one that would be used on a green except that the flagpole 14 is shorter and is optionally provided with a handgrip 42. The handgrip 42 may have a roughened surface or comprise foam, rubber or other elastic material that is easier and more comfortable to hold than the flagpole 14. Generally the flagpole 14 will have a length in the range 25 cm to 100 cm and preferably the flagpole 14 will have a length in the range 35 cm to 65 cm.

Figure 24 illustrates a flagpole assembly 50 for use with a golf cart or a golf trolley. The flagpole assembly 50 is similar to one that would be used on a green except that the flagpole 14 is provided with a clamp 52 for clamping the flagpole 14 to a trolley or cart. Optionally the flagpole 14 is connected to the clamp 52 by a flexible/bendable section 54 that allows the orientation flagpole 14 to be adjusted to be vertical or near vertical irrespective of the orientation of the clamp 52 when the clamp 52 is attached to the trolley or cart. The flagpole 14 may be of a similar length to that of a handheld flagpole assembly or as long or may be even longer than the flagpoles used on greens.

The flagpole 14 of both the handheld flagpole assembly 32 and the flagpole assembly 50 for use with a golf cart or trolley may be telescopic so that the flagpole can be substantially collapsed for easy transportation.

Referring to Figures 22, 25 and 26 the handheld flagpole assembly 32 and the flagpole assembly 50 for use with a golf cart or trolley may be provided with an instrument that gives a readout of the wind speed. Such an instrument may be similar to that used meteorologists and comprise a spinning element 34 that spins in the wind with a rotational speed that is in proportion to the wind speed and a dial 36 that gives a readout of the wind speed as determined by the spinning element 34. Such an instrument may be provided on course flagpoles but in this case if the golfer is distant from the flagpole 14 then binoculars may be required to read the dial 36.

The flagpole assemblies may also be provided with a static indicator 44 that indicates the direction of one or more compass points. A golfer will then be able to down the direction of the wind by observing the position of the rod 16 or indicator 24 relative to a compass point. If a number of such flagpole assemblies are provided along the golf course then the golfer will be able to easily quantify any variation in the wind direction along the course. The static indicator 44 can also be provided on the handheld 32 and cart/trolley mounted 50 flagpole assemblies so that the golfer is able to quantify the variation of wind speed between the actual positions that different golf shots are taken from.

## Claims

1. A golf flag support comprising:
an elongated support element adapted to provide support to a fabric flag such that, in use, the support element extends away from a flagpole;
a rotatable mounting connected to the support element adapted to allow the support element to rotate about the flagpole; and
a wind indicating member connected to the support element such that the wind indicating member is diametrically on the opposite side of the flagpole to the support member.

2. The golf flag support of claim 1, wherein the elongated support element is a rod.

3. The golf flag support of claim 2, wherein the rod has a longitudinal slot that is closable so as to hold an edge of a flag.

4. The golf flag support of claim 2, wherein the rod has a longitudinal cavity and a longitudinal slot opening that communicates with the longitudinal cavity, the longitudinal cavity having a diameter that is greater than the width of the longitudinal slot opening such that a thickened portion of a flag that runs along an edge of a flag may be entered into the longitudinal cavity.

5. The golf flag support of claim 1, wherein the elongated support element is a wire.

6. The golf flag support of any previous claim, wherein, in use, the support element extends at substantially 90° to the flagpole.

7. The golf flag support of any previous claim, wherein the or one of the support elements, in use, extends substantially along the full length of the flag.

8. The golf flag support element of any one of claims 1 to 6, wherein the support element extends for less than the full length of the flag to allow the portion of the flag not supported by the support element to flap freely.

9. The golf flag support of claim 8, wherein the or one of the support elements, in use, extends for a length that is between 25% and 75% of the full length of the flag.

10. The golf flag support of claim 9, wherein the or one of the support elements, in use, extends for a length that is between 40% and 60% of the full length of the flag.

11. The golf flag support of any previous claim, wherein the indicating member has a shape which defines two sides of a triangle.

12. A golf flag assembly comprising the flag support of any previous claim and a fabric flag supported by the support element.

13. A golf flagpole assembly comprising a flagpole and the flag support of any one of claims 1 to 11.

14. The golf flagpole assembly of claim 13 comprising a fabric flag supported by the support element.
